# EUROPÄISCHE PATENTSCHRIFT

(11) **EP 3 702 747 B1**
(45) Veröffentlichungstag und Bekanntmachung des Hinweises auf die Patenterteilung: **30.04.2025**
(21) Anmeldenummer: 20163745.1
(22) Anmeldetag: 10.09.2015
(51) Int. Cl.: G01K 7/42

(54) **KOCHFELDVORRICHTUNG**
HOTPLATE DEVICE
DISPOSITIF FORMANT PLAQUE DE CUISSON

(30) Priorität: 24.09.2014 ES 201431395
(43) Veröffentlichungstag der Anmeldung: 02.09.2020
(62) Teilanmeldung aus: 15184606.0
(73) Patentinhaber: BSH Hausgeräte GmbH, 81739 München (DE)
(72) Erfinder: Franco Gutierrez, Carlos, 50017 Zaragoza (ES); Herrera Rodriguez, Javier, 50009 Zaragoza (ES); Marzo Alvarez, Teresa Del Carmen, 50006 Zaragoza (ES); Paesa Garcia, David, 50015 Zaragoza (ES); Villanueva Valero, Beatriz, 50011 Zaragoza (ES)

(56) Entgegenhaltungen:
- WO-A1-2010/123187
- DE-A1- 102009 019 613
- DE-A1- 102012 013 275
- DE-A1- 19 812 345
- US-A- 5 767 488

## Beschreibung

Die Erfindung geht aus von einer Kochfeldvorrichtung nach dem Oberbegriff des Anspruchs 1 und einem Verfahren nach dem Oberbegriff des Anspruchs 9.

Aus dem Stand der Technik ist bereits eine Gargerätevorrichtung bekannt, die einen Sensor umfasst, der eine Temperaturkenngröße eines Gargeschirrs und/oder eines Garguts detektiert. Aus dieser Temperaturkenngröße ermittelt eine Steuereinheit der Gargerätevorrichtung eine Temperatur des Gargeschirrs und/oder des Garguts. Die Steuereinheit vergleicht einen Wert der ermittelten Temperatur mit einem Wert einer Grenztemperatur. Erreicht der Wert der ermittelten Temperatur den Wert der Grenztemperatur, so gibt die Steuereinheit ein optisches oder akustisches Signal an einen Bediener aus. Ein Beispiel ist im DE 198 12 345 A1 zu finden.

Die Aufgabe der Erfindung besteht insbesondere darin, eine gattungsgemäße Kochfeldvorrichtung mit verbesserten Eigenschaften hinsichtlich eines hohen Komforts für einen Bediener bereitzustellen. Die Aufgabe wird erfindungsgemäß durch die kennzeichnenden Merkmale der Patentansprüche 1 und 9 gelöst, während vorteilhafte Ausgestaltungen und Weiterbildungen der Erfindung den abhängigen Ansprüchen entnommen werden können.

Die Erfindung geht aus von einer Kochfeldvorrichtung mit zumindest einem Sensor, der dazu vorgesehen ist, wenigstens eine Temperaturkenngröße eines Gargeschirrs und/oder eines Garguts zu detektieren, und mit einer Steuereinheit, die dazu vorgesehen ist, die wenigstens eine Temperaturkenngröße zu verarbeiten.

Es wird vorgeschlagen, dass die Steuereinheit dazu vorgesehen ist, zumindest eine wenigstens im Wesentlichen verbleibende Zeitdauer auszugeben, ab welcher ein temperaturgeregelter Garvorgang verfügbar ist und insbesondere gestartet werden kann, wie beispielsweise automatisch und/oder vorteilhaft in Abhängigkeit von einer Bedieneingabe mittels einer Bedieneinheit. Unter einer "Kochfeldvorrichtung" soll insbesondere zumindest ein Teil, insbesondere eine Unterbaugruppe, eines Kochfelds, vorteilhaft eines Induktionskochfelds, verstanden werden. Insbesondere kann die Kochfeldvorrichtung auch das gesamte Kochfeld, vorteilhaft das gesamte Induktionskochfeld, umfassen. Unter einer "Steuereinheit" soll insbesondere eine elektronische Einheit verstanden werden, die vorzugsweise in einer Steuer- und/oder Regeleinheit eines Kochfeldes zumindest teilweise integriert ist und die vorzugsweise dazu vorgesehen ist, zumindest einen Heizbetrieb, insbesondere über eine Leistungselektronik, zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Unter einer "verbleibenden Zeitdauer" soll insbesondere eine Zeitdauer verstanden werden, die einen zeitlichen Abstand zwischen einem aktuellen Zeitpunkt und einem Eintreten eines bestimmten Ereignisses, d.h. einer Verfügbarkeit des temperaturgeregelten Garvorgangs, angibt. Unter einer "wenigstens im Wesentlichen" verbleibenden Zeitdauer soll insbesondere eine Zeitdauer mit einem Wert verstanden werden, der von einem Wert einer tatsächlich verbleibenden Zeitdauer um maximal 20 %, insbesondere um maximal 15 %, vorteilhaft um maximal 10 %, besonders vorteilhaft um maximal 5 % und vorzugsweise um maximal 3 % des Werts der tatsächlich verbleibenden Zeitdauer abweicht. Unter einem "temperaturgeregelten" Garvorgang soll insbesondere ein Garvorgang verstanden werden, bei welchem eine Temperatur, insbesondere eines Gargeschirrs und/oder eines Garguts, auf eine bestimmte Temperatur, insbesondere eine Solltemperatur, geregelt ist und/oder auf einem bestimmten Wert zumindest im Wesentlichen festgehalten ist. Es sind verschiedene temperaturgeregelte Garvorgänge denkbar. Beispielsweise könnte der temperaturgeregelte Garvorgang eine Abfolge von zumindest zwei sich unterscheidenden Temperaturen, welche jeweils für eine gewisse Zeitdauer beizubehalten sind, aufweisen, wobei der temperaturgeregelte Garvorgang insbesondere als Garprogramm ausgebildet sein könnte. Alternativ oder zusätzlich könnte der temperaturgeregelte Garvorgang wenigstens einen von einem Bediener vorgegebenen Wert einer bestimmten Temperatur aufweisen, wobei der Bediener den vorgegebenen Wert der bestimmten Temperatur insbesondere durch eine Bedieneingabe einer Heizleistung und/oder einer Heizleistungsdichte und/oder eines Werts einer bestimmten Temperatur mittels einer Bedieneinheit vorgeben könnte. Zu einer Erreichung des Werts der bestimmten Temperatur könnte die Steuereinheit vorteilhaft eine zumindest einem Gargeschirr und/oder Gargut zugeführte Heizleistungsdichte regeln, wodurch die Steuereinheit insbesondere eine direkte Regelung durchführen könnte und wobei insbesondere ein Wert der bestimmten Temperatur vorteilhaft aktiv durch Regulierung einer zugeführten Heizleistung und/oder Heizleistungsdichte wenigstens im Wesentlichen konstant gehalten werden könnte. Alternativ oder zusätzlich könnte die Steuereinheit zu einer Erreichung des Werts der bestimmten Temperatur eine zumindest einem Gargeschirr und/oder Gargut zugeführte Heizleistungsdichte wenigstens im Wesentlichen unverändert beibehalten, wobei ein Wert der bestimmten Temperatur insbesondere bei wenigstens im Wesentlichen konstanter Heizleistung und/oder bei wenigstens im Wesentlichen konstanter Heizleistungsdichte vorteilhaft automatisch durch eine Verdunstung von Wasser, wie beispielsweise bei einem Siedevorgang, wenigstens im Wesentlichen konstant gehalten werden könnte. Unter einer "bestimmten" Temperatur soll insbesondere eine zu erreichende Temperatur, wie beispielsweise eine Solltemperatur, verstanden werden. Die bestimmte Temperatur könnte auf verschiedene Weisen festgelegt sein. Beispielsweise könnte ein Betrag der bestimmten Temperatur insbesondere ein aus einer Bedieneingabe mittels einer Bedieneinheit resultierender Wert sein, der insbesondere durch die Bedieneingabe mittels der Bedieneinheit eingestellt und/oder vorteilhaft durch die Steuereinheit auf Basis der Bedieneingabe mittels der Bedieneinheit errechnet sein könnte. In einer alternativen Ausgestaltung könnte ein Betrag der bestimmten Temperatur fest vorgegeben sein, wobei der Betrag der bestimmten Temperatur insbesondere in der Speichereinheit der Steuereinheit als fest vorprogrammierter Wert und/oder als Wert gespeichert sein könnte, der insbesondere durch den Bediener eingegeben und/oder verändert und/oder veränderbar ist. Hierbei könnte der Betrag der bestimmten Temperatur beispielsweise ein beliebiger Wert eines Garvorgangs sein, wie insbesondere eine Siedetemperatur und/oder eine Warmhaltetemperatur und/oder eine Brattemperatur und/oder eine Frittier-Temperatur und/oder eine Dämpf-Temperatur und/oder eine Pochier-Temperatur. Unter der Wendung, dass die Steuereinheit dazu vorgesehen ist, einen Parameter, insbesondere die zumindest eine wenigstens im Wesentlichen verbleibende Zeitdauer, "auszugeben"', soll insbesondere verstanden werden, dass die Steuereinheit den Parameter insbesondere an eine weitere elektronische Einheit übermittelt und/oder vorteilhaft dass die Steuereinheit den Parameter über eine Ausgabeeinheit an einen Bediener übermittelt, wobei die Ausgabe an den Bediener insbesondere akustisch und/oder vorzugsweise optisch erfolgen könnte. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung kann insbesondere ein hoher Komfort für einen Bediener erreicht werden. Insbesondere kann eine hohe Planungssicherheit bei einem Bediener erreicht werden, der vorteilhaft die wenigstens im Wesentlichen verbleibende Zeitdauer sinnvoll nutzen kann, wie beispielsweise zu einer Durchführung anderer Tätigkeiten und/oder einer Vorbereitung des temperaturgeregelten Garvorgangs. Eine Ungewissheit, ob und/oder ab wann der temperaturgeregelte Garvorgang verfügbar ist, kann insbesondere vermieden werden, wobei vorteilhaft ein hoher Informationsgrad erreicht werden kann. Dadurch kann insbesondere eine einfache und/oder intuitive Bedienbarkeit erreicht werden.

Ferner wird vorgeschlagen, dass die zumindest eine wenigstens im Wesentlichen verbleibende Zeitdauer eine bis zu einem Erreichen einer bestimmten Temperatur wenigstens im Wesentlichen verbleibende Zeitdauer ist. Hierbei könnte die zumindest eine wenigstens im Wesentlichen verbleibende Zeitdauer beispielsweise eine restliche Vorheizzeit sein. Dadurch kann insbesondere ein optimales Garergebnis erreicht werden, wie beispielsweise durch eine Garung eines betreffenden Garguts auf einer empfohlenen und/oder geeigneten Temperatur.

Beispielsweise könnte die bestimmte Temperatur eine Gartemperatur sein, bei welcher ein Gargut zuzubereiten ist. Die bestimmte Temperatur könnte insbesondere eine bei einem Garziehen und/oder Pochieren verwendete Temperatur sein, wobei die bestimmte Temperatur beispielsweise einen Wert in einem Bereich zwischen 75°C und 95°C annehmen könnte. Alternativ könnte die bestimmte Temperatur eine bei einem Bratvorgang verwendete Temperatur sein und insbesondere einen Wert in einem Bereich zwischen 150°C und 200°C annehmen. Vorzugsweise ist die bestimmte Temperatur jedoch eine Siedetemperatur, wobei die bestimmte Temperatur insbesondere verschiedene Werte annehmen kann. Beispielsweise könnte ein Wert der bestimmten Temperatur von einem vorliegenden Umgebungsdruck abhängen, wie beispielsweise bei einer Verwendung eines als Druckgaren bezeichneten Garvorgangs und/oder bei einem Garen in außergewöhnlichen Höhen- oder Tiefenlagen. Alternativ oder zusätzlich könnte ein Wert der bestimmten Temperatur von einer Art des zu garenden Garguts abhängen, wie beispielsweise bei einem Erhitzen von Salzwasser. Bei einem Druck von wenigstens im Wesentlichen 1013 hPa nimmt die bestimmte Temperatur für reines Wasser als Gargut insbesondere einen Wert von wenigstens im Wesentlichen 100°C an. Dadurch kann insbesondere eine Aufheizzeit bis zu einem Erreichen der Siedetemperatur anderweitig genutzt werden, wie beispielsweise zu einer Durchführung von Hausarbeiten und/oder einer Vorbereitung des temperaturgeregelten Garvorgangs.

Weiterhin wird vorgeschlagen, dass die zumindest eine wenigstens im Wesentlichen verbleibende Zeitdauer eine bis zu einer Verfügbarkeit eines Garprogramms wenigstens im Wesentlichen verbleibende Zeitdauer ist. Unter einem "Garprogramm" soll ein durch die Steuereinheit durchgeführter insbesondere automatisch ablaufender Vorgang verstanden werden, bei welchem die Steuereinheit automatisch zumindest einen Garparameter auf einen Wert einstellt und/oder auf einen Wert eines zu einer bestimmten Zeit zu erreichenden Werts einer Referenzgröße des zumindest einen Garparameters regelt, wobei eine zeitliche Abfolge des zumindest einen Garparameters vorgegeben ist. Es sind verschiedene, einem Fachmann als sinnvoll erscheinende Ausgestaltungen des zumindest einen Garparameters denkbar. Der zumindest eine Garparameter könnte beispielsweise eine Heizleistung und/oder eine Heizleistungsdichte sein, wobei die Steuereinheit insbesondere eine zumindest einem Gargeschirr und/oder Gargut zugeführte Heizleistung und/oder Heizleistungsdichte auf einen Wert einer zu einer bestimmten Zeit zu erreichenden Heizleistung und/oder Heizleistungsdichte regelt. Alternativ oder zusätzlich könnte der zumindest eine Garparameter eine Temperatur sein, wobei die Steuereinheit eine Temperatur zumindest eines Gargeschirrs und/oder Garguts auf einen Wert einer zu einer bestimmten Zeit zu erreichenden Temperatur regelt. Dadurch kann insbesondere ein hoher Komfort für einen Bediener erreicht werden.

Ferner wird vorgeschlagen, dass die zumindest eine wenigstens im Wesentlichen verbleibende Zeitdauer mindestens 80 s, insbesondere mindestens 90 s, vorteilhaft mindestens 100 s, besonders vorteilhaft mindestens 110 s und vorzugsweise mindestens 120 s beträgt, innerhalb welcher die Steuereinheit insbesondere interne Berechnungen und/oder Kalibrierungen und/oder Testmessungen durchführt. Beispielsweise könnte die Steuereinheit eine Heizleistung und/oder eine Heizleistungsdichte, mit welcher die Steuereinheit zumindest ein Gargeschirr und/oder Gargut beheizt, berechnen. Alternativ oder zusätzlich könnte die Steuereinheit in der zumindest einen wenigstens im Wesentlichen verbleibenden Zeitdauer eine Kalibration des zumindest einen Sensors durchführen. Unter der Wendung, dass die Steuereinheit ein Gargeschirr und/oder Gargut "beheizt", soll insbesondere verstanden werden, dass die Steuereinheit zumindest eine Leistungselektronik ansteuert, welche in Abhängigkeit einer Ansteuerung durch die Steuereinheit dem Gargeschirr und/oder Gargut Energie, insbesondere in Form von Wärmeenergie, zuführt. Dadurch kann insbesondere eine hohe Zuverlässigkeit und/oder Genauigkeit des temperaturgeregelten Garvorgangs erreicht werden.

Zudem wird vorgeschlagen, dass die zumindest eine wenigstens im Wesentlichen verbleibende Zeitdauer ein Maximum einer bis zu einem Erreichen einer bestimmten Temperatur wenigstens im Wesentlichen verbleibenden Zeitdauer und einer bis zu einer Verfügbarkeit eines Garprogramms wenigstens im Wesentlichen verbleibenden Zeitdauer ist, wobei die Steuereinheit insbesondere einen größeren Wert einer der wenigstens im Wesentlichen verbleibenden Zeitdauern ausgibt. Dadurch kann insbesondere eine hohe Funktionstüchtigkeit erreicht werden, da vorteilhaft mit einer hohen Sicherheit alle internen Berechnungen der Steuereinheit abgeschlossen sind.

Weiterhin wird vorgeschlagen, dass die Steuereinheit dazu vorgesehen ist, die zumindest eine wenigstens im Wesentlichen verbleibende Zeitdauer als prozentuale Größe insbesondere einer gesamten Zeitdauer, von welcher die zumindest eine wenigstens im Wesentlichen verbleibende Zeitdauer einen Teilbereich ausbildet, auszugeben, wodurch insbesondere eine intuitive und/oder komfortable Bedienung erreicht werden kann.

Alternativ oder zusätzlich wird vorgeschlagen, dass die Steuereinheit dazu vorgesehen ist, die zumindest eine wenigstens im Wesentlichen verbleibende Zeitdauer als absolute Größe auszugeben. Insbesondere ist die Steuereinheit dazu vorgesehen, die zumindest eine wenigstens im Wesentlichen verbleibende Zeitdauer in Sekunden und/oder in Minuten und/oder in Stunden auszugeben. Dadurch kann insbesondere eine präzise Angabe der zumindest einen wenigstens im Wesentlichen verbleibenden Zeitdauer erreicht werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldvorrichtung und einem Gargeschirr in einer schematischen Draufsicht,
- Fig. 2: das Gargeschirr in einer schematischen Schnittdarstellung,
- Fig. 3: ein Diagramm eines Verlauf einer Temperatur über einer Zeitdauer in einer schematischen Darstellung und
- Fig. 4: einen vergrößerten Ausschnitt eines Bereichs des Diagramms aus Fig. 3 in einer schematischen Darstellung.

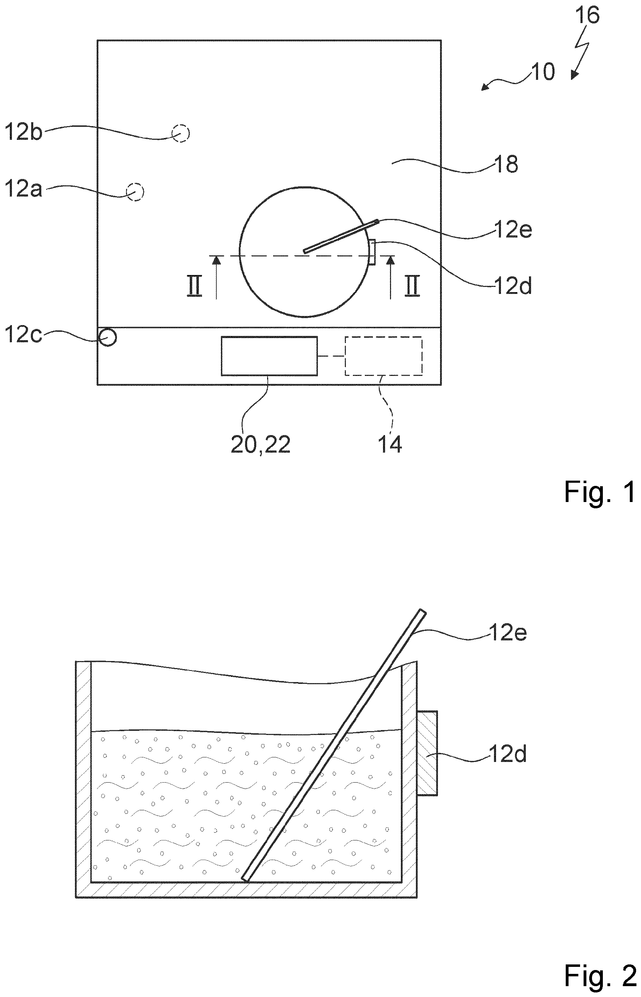

Fig. 1 zeigt ein Gargerät 16, das als Kochfeld ausgebildet ist, mit einer Gargerätevorrichtung 10, die als Kochfeldvorrichtung ausgebildet ist. Die Gargerätevorrichtung 10 umfasst eine Gargeräteplatte 18. In einem montierten Zustand bildet die Gargeräteplatte 18 einen Teil eines Außengehäuses, insbesondere eines Außengehäuses des Gargeräts 16, aus. Die Gargeräteplatte ist beispielsweise als Frontplatte und/oder Deckplatte des Gargeräts ausgebildet. Im vorliegenden Ausführungsbeispiel ist die Gargeräteplatte 18 als Kochfeldplatte ausgebildet und zu einem Aufstellen von Gargeschirr vorgesehen. Die Gargerätevorrichtung 10 umfasst mehrere Heizelemente (nicht dargestellt), die jeweils dazu vorgesehen sind, auf der Gargeräteplatte 18 oberhalb der Heizelemente aufgestelltes Gargeschirr zu erhitzen. Die Heizelemente sind als Induktionsheizelemente ausgebildet. Die Heizelemente sind zu einer Detektion von aufgestelltem Gargeschirr vorgesehen.

Die Gargerätevorrichtung 10 umfasst eine Bedieneinheit 20 zu einer Eingabe und/oder Auswahl von Betriebsparametern, beispielsweise einer Heizleistung und/oder einer Heizleistungsdichte und/oder einer Heizzone. Die Gargerätevorrichtung 10 umfasst eine Steuereinheit 14. Die Steuereinheit 14 ist dazu vorgesehen, in Abhängigkeit von mittels der Bedieneinheit 20 eingegebenen Betriebsparametern Aktionen auszuführen und/oder Einstellungen zu verändern. Die Steuereinheit 14 regelt in einem Heizbetriebszustand eine Energiezufuhr zu den Heizelementen. Die Gargerätevorrichtung 10 umfasst eine Leistungselektronik (nicht dargestellt). Die Leistungselektronik ist zu einer Versorgung der Heizelemente mit elektrischer Energie vorgesehen. Die Steuereinheit 14 steuert die Leistungselektronik an, um die aktivierten Heizelemente mit elektrischem Strom zu versorgen.

Die Gargerätevorrichtung 10 umfasst eine Vielzahl an Sensoren 12, von welchen im Folgenden lediglich einer beschrieben wird. Der Sensor 12 detektiert eine Temperaturkenngröße. Es sind verschiedene Ausgestaltungen des Sensors denkbar. Beispielsweise könnte der Sensor eine Temperaturkenngröße eines Garguts detektierten, welches sich insbesondere in einem Gargeschirr befinden könnte, um insbesondere einen als Kochvorgang ausgebildeten Garvorgang durchzuführen. Alternativ oder zusätzlich könnte der Sensor eine Temperaturkenngröße eines Gargeschirrs, insbesondere eines Gargeschirrbodens, detektieren, wobei die Steuereinheit das Gargeschirr insbesondere zu einer Durchführung eines als Bratvorgang ausgebildeten Garvorgangs beheizen könnte.

In Fig. 1 und 2 sind verschiedene Ausgestaltungen des Sensors 12 dargestellt, wobei verschiedenen Ausgestaltungen mit den Buchstaben a bis e versehen sind. Beispielsweise könnte ein Sensor 12a vorgesehen sein, der auf einer einem Bediener abgewandten Seite der Gargeräteplatte 18 angeordnet und insbesondere als Infrarot-Sensor ausgebildet sein könnte. Hierbei könnte der Sensor 12a eine Temperatur eines Gargeschirrbodens detektieren, indem der Sensor 12a insbesondere von dem Gargeschirrboden kommende Infrarot-Strahlung detektiert. Alternativ oder zusätzlich könnte ein Sensor 12b vorgesehen sein, der auf der einem Bediener abgewandten Seite der Gargeräteplatte 18 angeordnet und insbesondere als Messwiderstand ausgebildet sein könnte. Hierbei könnte der Sensor 12b seinen Widerstand in Abhängigkeit einer Temperatur ändern, wobei der Sensor 12b eine von dem Gargeschirr durch die Gargeräteplatte 18 hindurch an den Sensor 12b übermittelte Temperatur detektieren könnte. In einer weiteren möglichen Ausgestaltung könnte ein Sensor 12c in einem Messdom integriert sein, welcher an einem Rand eines Heizbereichs angeordnet und beweglich relativ zu der Gargeräteplatte 18 angeordnet sein könnte, wobei der Messdom insbesondere auf der einem Bediener abgewandten Seite der Gargeräteplatte 18 angeordnet sein könnte und zu einer Durchführung einer Detektion einer Temperatur insbesondere in einem Heizbetriebszustand von der einem Bediener abgewandten Seite der Gargeräteplatte 18 auf eine einem Bediener zugewandte Seite der Gargeräteplatte 18 bewegt werden könnte. Hierbei könnte der Sensor 12c vorteilhaft als Infrator-Sensor ausgebildet sein und von dem Gargeschirr und/oder einem in dem Gargeschirr befindlichen Gargut kommende Infrarot-Strahlung detektieren, um insbesondere eine Temperatur des Gargeschirrs und/oder des in dem Gargeschirr befindlichen Garguts zu detektieren.

Ein Sensor 12d, 12e könnte auch direkt an dem Gargeschirr angeordnet sein (vgl. Fig. 2). Beispielsweise könnte ein Sensor 12d zu einer Befestigung an einer Seitenwand des Gargeschirrs vorgesehen sein und insbesondere eine Temperatur der Seitenwand des Gargeschirrs detektieren, wobei der Sensor 12d insbesondere einen Messwiderstand aufweisen könnte. Alternativ oder zusätzlich könnte der an der Seitenwand befestigte Sensor 12d einen Infrarot-Sensor aufweisen und insbesondere eine von der Seitenwand des Gargeschirrs und/oder von einem in dem Gargeschirr befindlichen Gargut emittierte Infrarot-Strahlung detektieren, um insbesondere eine Temperatur des Gargeschirrs und/oder des in dem Gargeschirr befindlichen Garguts zu detektieren. In einer weiteren möglichen Ausgestaltung könnte ein Sensor 12e zu einem direkten Kontakt mit einem in dem Gargeschirr befindlichen Gargut vorgesehen sein und insbesondere einen Messfühler aufweisen, der eine Temperatur des in dem Gargeschirr befindlichen Garguts detektiert, wie beispielsweise durch Änderung eines Widerstands in Abhängigkeit einer Temperatur des sich in dem Gargeschirr befindlichen Garguts. Eine Anordnung und/oder spezifische Ausgestaltung des Sensors ist jedoch nicht Gegenstand dieser Erfindung, weshalb an dieser Stelle auf eine detailliertere Darstellung verzichtet wird. Im Folgenden wird lediglich allgemein ein einziger Sensor 12 beschrieben.

Der Sensor 12 übermittelt die detektierte Temperaturkenngröße an die Steuereinheit 14. Die Steuereinheit 14 verarbeitet die Temperaturkenngröße. Auf Basis der Temperaturkenngröße ermittelt die Steuereinheit 14 eine im Wesentlichen verbleibende Zeitdauer, ab welcher ein temperaturgeregelter Garvorgang verfügbar ist. Zu einer Ermittlung der im Wesentlichen verbleibenden Zeitdauer führt die Steuereinheit 14 eine Vielzahl von internen Berechnungen aus. Diese Berechnungen hängen von einer Vielzahl von Faktoren ab, von welchen im Folgenden lediglich die für die vorliegende Erfindung wesentlichen Faktoren beschrieben werden.

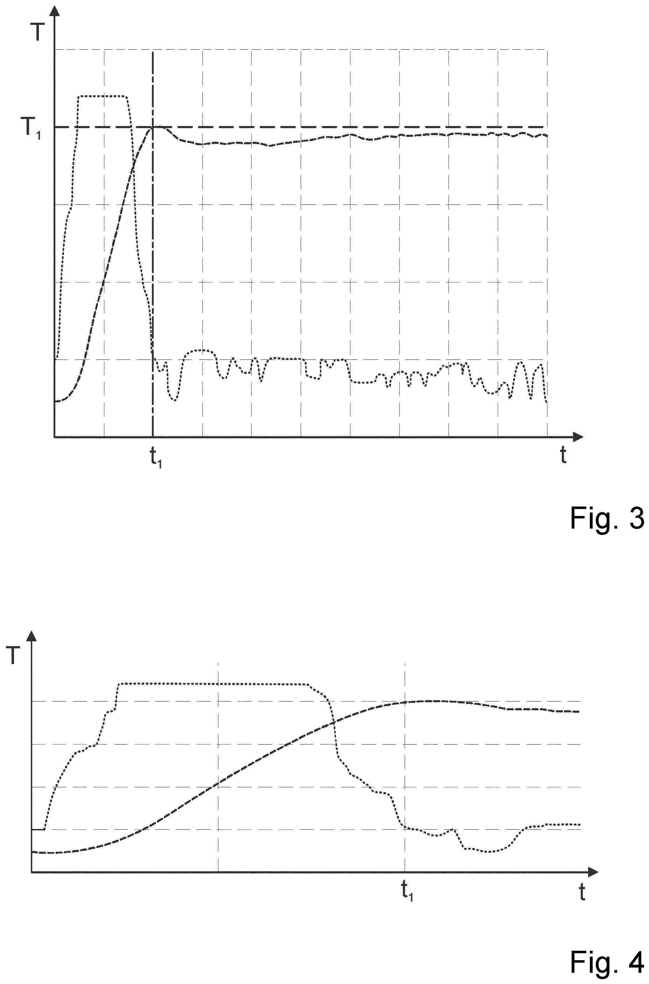

Zu einer Ermittlung der im Wesentlichen verbleibenden Zeitdauer detektiert die Steuereinheit 14 eine Zeitdauer, die seit einem Beginn eines Garvorgangs verstrichen ist (vgl. Fig. 3 und 4). Dieser Garvorgang könnte beispielsweise ein Aufheizvorgang sein, um insbesondere ein Gargut und/oder ein Gargeschirr auf eine zu erreichende Temperatur zu erhitzen. Die Steuereinheit 14 detektiert eine seit dem Beginn des Garvorgangs übertragene Heizleistungsdichte. Die seit dem Beginn des Garvorgangs übertragene Heizleistungsdichte ist der Steuereinheit 14 aufgrund einer Ansteuerung der Leistungselektronik bekannt. Auf Basis der durch den Sensor 12 übermittelten Temperaturkenngröße ermittelt die Steuereinheit 14 eine Temperatur, welche insbesondere in dem Garvorgang zu einem bestimmten Zeitpunkt erreicht ist. Auf Basis der seit einem Beginn eines Garvorgangs verstrichenen Zeitdauer, der seit dem Beginn des Garvorgangs übertragenen Heizleistungsdichte und der auf Basis der Temperaturkenngröße ermittelten Temperatur ermittelt die Steuereinheit 14 im vorliegenden Ausführungsbeispiel die im Wesentlichen verbleibende Zeitdauer. Zu einer Ermittlung der im Wesentlichen verbleibenden Zeitdauer nimmt die Steuereinheit 14 eine im Wesentlichen kontante Wärmekapazität an. Änderungen der Wärmekapazität sind in dem betrachteten Temperaturbereich bei ansonsten im Wesentlichen unveränderten Rahmenbedingungen vernachlässigbar klein. Die Rahmenbedingungen könnten sich durch äußere Einflüsse ändern, wie beispielsweise durch eine Hinzugabe von Gargut in ein Gargeschirr. Bei einer Änderung der Rahmenbedingungen könnte sich eine Temperatur, welche die Steuereinheit 14 auf Basis der durch den Sensor 12 übermittelten Temperaturkenngröße ermittelt, insbesondere in unvorhersehbarer Weise ändern.

Die Steuereinheit 14 führt eine regelmäßige Ermittlung der Wärmekapazität durch, wie beispielsweise in zeitlichen Abständen von maximal 10 s, insbesondere von maximal 7 s, vorteilhaft von maximal 5 s, besonders vorteilhaft von maximal 1 s und vorzugsweise von maximal 0,1 s. Auf Basis der durch den Sensor 12 übermittelten Temperaturkenngröße ermittelt die Steuereinheit 14 eine aktuelle Temperatur, welche in dem Garvorgang zu einem Zeitpunkt einer Ermittlung der aktuellen Temperatur erreicht ist. Die Steuereinheit 14 vergleicht die aktuelle Temperatur mit einer erwarteten Temperatur, welche die Steuereinheit 14 auf Basis der zu der Ermittlung der im Wesentlichen verbleibenden Zeit herangezogenen Formeln ermittelt. Im vorliegenden Ausführungsbeispiel ermittelt die Steuereinheit 14 auf Basis der bis zu einem bestimmten Zeitpunkt ermittelten Temperaturen eine Kurvenanpassung. Die Kurvenanpassung könnte beispielsweise einen linearen und/oder logarithmischen und/oder exponentiellen und/oder potenzierten und/oder polynomischen Verlauf annehmen. Alternativ oder zusätzlich könnte die Kurvenanpassung einen Verlauf in Form eines beschränkten Wachstums annehmen. Auf eine derartige Kurvenanpassung könnte jedoch verzichtet werden, wobei die Steuereinheit einen Wert der erwarteten Temperatur direkt, insbesondere mittels der zu der Ermittlung der im Wesentlichen verbleibenden Zeit herangezogenen Formeln, ermitteln könnte. Sollte eine Differenz zwischen der aktuellen Temperatur und der erwarteten Temperatur einen Schwellwert übersteigen, so ermittelt die Steuereinheit 14 eine neue im Wesentlichen verbleibende Zeitdauer.

In einer weiteren Ausgestaltung könnte die Steuereinheit die im Wesentlichen verbleibende Zeitdauer auf andere Weise ermitteln. Die Steuereinheit könnte beispielsweise eine empirische Abschätzung der im Wesentlichen verbleibenden Zeitdauer durchführen. Beispielweise könnte die Steuereinheit bei dem Garvorgang nach einer beliebigen Zeit y einen Wert einer Zeitdauer ermitteln, welche bei dem Garvorgang bisher vergangen ist. Zudem könnte die Steuereinheit aus der von dem Sensor detektierten Temperaturkenngröße zu der Zeit y einen Wert x einer Temperatur ermitteln, welche bei dem Garvorgang bisher erreicht ist. Neben dem Wert der beliebigen Zeit y und dem Wert der zu dieser Zeit y bei dem Garvorgang bislang erreichten Temperatur x könnte die Steuereinheit zudem die bestimmte Temperatur, welche bei dem Garvorgang zu erreichen ist, kennen, wobei die Steuereinheit insbesondere mittels dieser bekannten Werte eine Kurvenanpassung vornehmen könnte, um hieraus insbesondere die im Wesentlichen verbleibende Zeitdauer zu ermitteln. Hierbei könnte die Steuereinheit beispielsweise einen beliebigen Verlauf der Kurvenanpassung wählen, wobei im Folgenden als Beispiel ein linearer Verlauf angenommen ist. Sollte beispielsweise der Wert x der Temperatur im Wesentlichen 25 % eines Werts der bestimmten Temperatur betragen, so sind 25 % der Zeitdauer und 25 % der Temperatur erreicht. Die Steuereinheit könnte in diesem Beispiel für die im Wesentlichen verbleibende Zeitdauer einen Wert ermitteln, der dem vierfachen eines Werts der Temperatur bei dem Wert von x % entspricht.

In einer weiteren Ausgestaltung könnte die Steuereinheit zu einer Ermittlung der im Wesentlichen verbleibenden Zeitdauer eine im Wesentlichen konstante Energiezufuhr, insbesondere Heizleistungsdichte, annehmen. Die Steuereinheit könnte auf Basis der im Wesentlichen konstanten Energiezufuhr eine Kurvenanpassung eines insbesondere bis zu einem bestimmten Zeitpunkt durchlaufenen Temperaturverlaufs vornehmen. Aus der Kurvenanpassung könnte die Steuereinheit die im Wesentlichen verbleibende Zeitdauer ermitteln.

Die Steuereinheit 14 gibt die im Wesentlichen verbleibende Zeitdauer aus, ab welcher ein temperaturgeregelter Garvorgang verfügbar ist. Die Bedieneinheit 20 weist eine Ausgabeeinheit 22 auf. Die Steuereinheit 14 gibt die im Wesentlichen verbleibende Zeitdauer mittels der Ausgabeeinheit 22 aus. Die Ausgabeeinheit 22 ist zu einer Ausgabe an einen Bediener vorgesehen. Die Ausgabeeinheit 22 weist mindestens zwei Ausgabezustände auf. In zumindest einem Ausgabezustand ist die Ausgabeeinheit 22 zu einer optischen und/oder akustischen Ausgabe vorgesehen. Hierbei ist die Ausgabeeinheit 22 dazu vorgesehen, ein für einen Menschen sichtbares Signal und/oder ein hörbares Signal auszugeben.

Es sind verschiedene Ausgestaltungen der Ausgabeeinheit denkbar. Die Ausgabeeinheit könnte zu einer optischen Ausgabe insbesondere ein Leuchtmittel, vorteilhaft eine LED, und/oder eine vorteilhaft hinterleuchtete Displayeinheit, insbesondere eine Matrixdisplayeinheit, vorteilhaft ein LCD-Display und/oder ein OLED-Display und/oder elektronisches Papiers (e-paper, E-Ink), aufweisen. Zu einer akustischen Ausgabe könnte die Ausgabeeinheit elektrische Energie in Schallenergie umwandeln. Die Ausgabeeinheit könnte hierzu insbesondere eine Ausgabeelektronik aufweisen, die dazu vorgesehen sein könnte, eine Frequenz in einem Bereich von 0 Hz bis 20 kHz, insbesondere von 50 Hz bis 8 kHz und vorzugsweise von 200 Hz bis 5 kHz zu erzeugen. Die Ausgabeelektronik könnte die Frequenz insbesondere auf einen Tonerzeuger der Ausgabeeinheit übertragen, wie beispielsweise auf eine Saite und/oder insbesondere eine Membran und/oder vorteilhaft auf einen Lautsprecher.

Die im Wesentlichen verbleibende Zeitdauer kann verschiedene Ausgestaltungen annehmen. Beispielsweise könnte ein Bediener eine Flüssigkeit in einem Gargeschirr aufkochen wollen. Der Bediener stellt ein mit der Flüssigkeit gefülltes Gargeschirr auf der **Gargeräteplatte** 18 ab. Die sich in dem Gargeschirr befindliche Flüssigkeit hat zu Beginn eines Kochvorgangs eine Temperatur von im Wesentlichen 20°C. In einem Verfahren zu einem Betrieb der Gargerätevorrichtung 10 steuert die Steuereinheit 14 die Leistungselektronik zu einer Beheizung der Heizelemente an. Durch den Sensor 12 wird eine Temperaturkenngröße detektiert, welche anschließend durch die Steuereinheit 14 verarbeitet wird. Der Sensor 12 führt eine regelmäßige Detektion der Temperaturkenngröße aus. Die Steuereinheit 14 verarbeitet jede detektierte Temperaturkenngröße und ermittelt jeweils eine aktuelle Temperatur. Im betrachteten Beispiel des Aufheizvorgangs ist die im Wesentlichen verbleibende Zeitdauer eine bis zu einem Erreichen einer bestimmten Temperatur T₁ im Wesentlichen verbleibende Zeitdauer t₁ (vgl. Fig. 3 und 4). Hierbei ist die bestimmte Temperatur T₁ eine Siedetemperatur. Bei einem Luftdruck von im Wesentlichen 1013 hPa nimmt die Siedetemperatur einen Wert von im Wesentlichen 100°C an. In dem Verfahren wird die im Wesentlichen verbleibende Zeitdauer, ab welcher ein temperaturgeregelter Garvorgang verfügbar ist, durch die Steuereinheit 14 ausgegeben.

Im vorliegenden Ausführungsbeispiel gibt die Steuereinheit 14 die im Wesentlichen verbleibende Zeitdauer optisch mittels der Ausgabeeinheit 22 an einen Bediener aus. Die Steuereinheit 14 gibt die im Wesentlichen verbleibende Zeitdauer als prozentuale Größe aus. Zusätzlich zu einer Ausgabe der im Wesentlichen verbleibenden Zeitdauer als prozentuale Größe gibt die Steuereinheit 14 die im Wesentlichen verbleibende Zeitdauer als absolute Größe aus. Die Steuereinheit 14 gibt die im Wesentlichen verbleibende Zeitdauer in einem Format mm:ss aus. Hierbei steht "mm" für Minuten und "ss" für Sekunden. Zu einem Zeitpunkt, an welchem ein temperaturgeregelter Garvorgang verfügbar ist, gibt die Steuereinheit 14 die im Wesentlichen verbleibende Zeitdauer akustisch an einen Bediener aus. Hierzu gibt die Steuereinheit 14 ein für einen Menschen hörbares Signal aus, um den Bediener auf eine Verfügbarkeit eines temperaturgeregelten Garvorgangs aufmerksam zu machen.

In einem weiteren Fall möchte ein Bediener beispielsweise einen Bratvorgang durchführen. Hierzu möchte der Bediener beispielsweise ein Garprogramm verwenden. Im betrachteten Beispiel ist die im Wesentlichen verbleibende Zeitdauer eine bis zu einer Verfügbarkeit eines Garprogramms im Wesentlichen verbleibende Zeitdauer t₁. Nach einem Aufstellen und einer Detektion eines Gargeschirrs aktiviert die Steuereinheit 14 zunächst die Heizelemente durch Ansteuerung der Leistungselektronik. Die Steuereinheit 14 führt eine Vielzahl interner Berechnungen aus, welche für die vorliegende Erfindung als unwesentlich anzusehen sind, wie beispielsweise eine Kalibration des Sensors 12. Diese Kalibration des Sensors 12 ist jedoch nicht Gegenstand der vorliegenden Erfindung, weshalb im Folgenden auf eine Beschreibung hierzu verzichtet wird. Aufgrund dieser für die vorliegende Erfindung unwesentlichen Berechnungen wird im vorliegenden Ausführungsbeispiel eine Vorlaufzeit angenommen, aufgrund welcher die im Wesentlichen verbleibende Zeitdauer t₁ mindestens 80 s beträgt.

Beispielsweise nimmt die im Wesentlichen verbleibende Zeitdauer t₁ einen Wert von 200 s an. Nach Abschluss der internen Berechnungen gibt die Steuereinheit die im Wesentlichen verbleibende Zeitdauer aus. Die internen Berechnungen könnten beispielsweise nach 80 s abgeschlossen sein. Anschließend könnte die Steuereinheit beispielsweise einen Wert von 40 % ausgeben. Alternativ oder zusätzlich könnte die Steuereinheit eine im Wesentlichen verbleibende Zeitdauer mit einem Wert von 120 s ausgeben. Die im Wesentlichen verbleibende Zeitdauer könnte alternativ oder zusätzlich in Minuten, beispielsweise in einem Format 2 min und/oder in einem Format 02:00 min, ausgegeben werden.

Das von dem Bediener gewünschte Garprogramm ist erst nach einem Aufheizvorgang des aufgestellten Gargeschirrs auf eine bestimmte Temperatur verfügbar. Die im Wesentlichen verbleibende Zeitdauer bis zu einem Erreichen der bestimmten Temperatur könnte beispielsweise einen Wert annehmen, der geringer ist als die für die internen Berechnungen benötigte Zeitdauer, aufgrund welcher die im Wesentlichen verbleibende Zeitdauer weniger als 80 s beträgt. Bei Vorliegen von zumindest zwei im Wesentlichen verbleibenden Zeitdauern gibt die Steuereinheit 14 die größere der zumindest zwei im Wesentlichen verbleibenden Zeitdauern aus. Hierbei ist die im Wesentlichen verbleibende Zeitdauer ein Maximum einer bis zu einem Erreichen einer bestimmten Temperatur im Wesentlichen verbleibenden Zeitdauer und einer bis zu einer Verfügbarkeit eines Garprogramms im Wesentlichen verbleibenden Zeitdauer.

In einer weiteren Ausgestaltung könnte die Steuereinheit insbesondere dazu vorgesehen sein, die im Wesentlichen verbleibende Zeitdauer graphisch darzustellen. Beispielsweise könnte die Steuereinheit hierzu mittels der Ausgabeeinheit Diagramme in verschiedenen Formen ausgeben, wie beispielweise in Form von Säulen und/oder in Form von Balken und/oder in Form von Kreisen und/oder in Form eines Kurvenverlaufs mindestens einer Kurve und/oder Kurvenanpassung. Denkbar ist insbesondere, dass die Steuereinheit dazu vorgesehen ist, in Abhängigkeit von einer Bedieneingabe mittels der Bedieneinheit zwischen wenigstens zwei Ausgabevarianten der im Wesentlichen verbleibenden Zeitdauer zu wechseln, wie beispielsweise zwischen einer Ausgabe der im Wesentlichen verbleibenden Zeit als prozentuale Größe und einer Ausgabe der im Wesentlichen verbleibenden Zeit als absolute Größe.

### Bezugszeichen

- 10: Gargerätevorrichtung
- 12: Sensor
- 14: Steuereinheit
- 16: Gargerät
- 18: Gargeräteplatte
- 20: Bedieneinheit
- 22: Ausgabeeinheit

## Patentansprüche

1. Kochfeldvorrichtung (10) mit zumindest einem Sensor (12), der dazu vorgesehen ist, wenigstens eine Temperaturkenngröße eines Gargeschirrs und/oder eines Garguts zu detektieren, und mit einer Steuereinheit (14), die dazu vorgesehen ist, die wenigstens eine Temperaturkenngröße zu verarbeiten, **dadurch gekennzeichnet, dass** die Steuereinheit (14) dazu vorgesehen ist, zumindest eine wenigstens im Wesentlichen verbleibende Zeitdauer auszugeben, ab welcher ein temperaturgeregelter Garvorgang verfügbar ist, wobei die zumindest eine wenigstens im Wesentlichen verbleibende Zeitdauer eine bis zu einer Verfügbarkeit eines Garprogramms wenigstens im Wesentlichen verbleibende Zeitdauer ist, wobei das Garprogramm ein durch die Steuereinheit (14) durchgeführter automatisch ablaufender Vorgang ist, bei welchem die Steuereinheit (14) automatisch zumindest einen Garparameter auf einen Wert einstellt und/oder auf einen Wert eines zu einer bestimmten Zeit zu erreichenden Werts einer Referenzgröße des zumindest einen Garparameters regelt, wobei eine zeitliche Abfolge des zumindest einen Garparameters vorgegeben ist.

2. Kochfeldvorrichtung (10) nach Anspruch 1, **dadurch gekennzeichnet, dass** die zumindest eine wenigstens im Wesentlichen verbleibende Zeitdauer eine bis zu einem Erreichen einer bestimmten Temperatur wenigstens im Wesentlichen verbleibende Zeitdauer ist.

3. Kochfeldvorrichtung (10) nach Anspruch 2, **dadurch gekennzeichnet, dass** die bestimmte Temperatur eine Siedetemperatur ist.

4. Kochfeldvorrichtung (10) nach einem der vorhergehenden Ansprüche, **dadurch gekennzeichnet, dass** die zumindest eine wenigstens im Wesentlichen verbleibende Zeitdauer mindestens 80 s beträgt.

5. Kochfeldvorrichtung (10) nach einem der vorhergehenden Ansprüche, **dadurch gekennzeichnet, dass** die zumindest eine wenigstens im Wesentlichen verbleibende Zeitdauer ein Maximum einer bis zu einem Erreichen einer bestimmten Temperatur wenigstens im Wesentlichen verbleibenden Zeitdauer und einer bis zu einer Verfügbarkeit eines Garprogramms wenigstens im Wesentlichen verbleibenden Zeitdauer ist.

6. Kochfeldvorrichtung (10) nach einem der vorhergehenden Ansprüche, **dadurch gekennzeichnet, dass** die Steuereinheit (14) dazu vorgesehen ist, die zumindest eine wenigstens im Wesentlichen verbleibende Zeitdauer als prozentuale Größe auszugeben.

7. Kochfeldvorrichtung (10) nach einem der vorhergehenden Ansprüche, **dadurch gekennzeichnet, dass** die Steuereinheit (14) dazu vorgesehen ist, die zumindest eine wenigstens im Wesentlichen verbleibende Zeitdauer als absolute Größe auszugeben.

8. Kochfeld (16) mit zumindest einer Kochfeldvorrichtung (10) nach einem der vorhergehenden Ansprüche.

9. Verfahren zu einem Betrieb einer Kochfeldvorrichtung (10), insbesondere nach einem der Ansprüche 1 bis 7, mit zumindest einem Sensor (12), durch welchen wenigstens eine Temperaturkenngröße eines Gargeschirrs und/oder eines Garguts detektiert wird, **dadurch gekennzeichnet, dass** zumindest eine wenigstens im Wesentlichen verbleibende Zeitdauer ausgegeben wird, ab welcher ein temperaturgeregelter Garvorgang verfügbar ist, wobei die zumindest eine wenigstens im Wesentlichen verbleibende Zeitdauer eine bis zu einer Verfügbarkeit eines Garprogramms wenigstens im Wesentlichen verbleibende Zeitdauer ist, wobei das Garprogramm ein automatisch ablaufender Vorgang ist, bei welchem automatisch zumindest ein Garparameter auf einen Wert eingestellt wird und/oder auf einen Wert eines zu einer bestimmten Zeit zu erreichenden Werts einer Referenzgröße des zumindest einen Garparameters geregelt wird, wobei eine zeitliche Abfolge des zumindest einen Garparameters vorgegeben ist.

## Claims

1. Hob apparatus (10) with at least one sensor (12) which is provided to detect at least one temperature characteristic variable of an item of cookware and/or of a food to be cooked, and with a control unit (14) which is provided to process the at least one temperature characteristic variable, **characterised in that** the control unit (14) is provided to output at least one period of time at least substantially remaining, after which a temperature-regulated cooking procedure is available, wherein the at least one period of time at least substantially remaining is a period of time at least substantially remaining before a cooking program is available, wherein the cooking program is a procedure performed by the control unit (14), proceeding automatically, in which the control unit (14) automatically sets at least one cooking parameter to a value and/or regulates it to a value of a value of a reference variable of the at least one cooking parameter which is to be reached at a particular time, wherein a temporal sequence of the at least one cooking parameter is specified.

2. Hob apparatus (10) according to claim 1, **characterised in that** the period of time at least substantially remaining is a period of time at least substantially remaining until a particular temperature is reached.

3. Hob apparatus (10) according to claim 2, **characterised in that** the particular temperature is a boiling temperature.

4. Hob apparatus (10) according to one of the preceding claims, **characterised in that** the at least one period of time at least substantially remaining amounts to at least 80 s.

5. Hob apparatus (10) according to one of the preceding claims, **characterised in that** the at least one period of time at least substantially remaining is a maximum period of time at least substantially remaining before a particular temperature is reached and a maximum period of time at least substantially remaining before a cooking program is available.

6. Hob apparatus (10) according to one of the preceding claims, **characterised in that** the control unit (14) is provided to output the at least one period of time at least substantially remaining as a percentage variable.

7. Hob apparatus (10) according to one of the preceding claims, **characterised in that** the control unit (14) is provided to output the at least one period of time at least substantially remaining as an absolute variable.

8. Hob (16) with at least one hob apparatus (10) according to one of the preceding claims.

9. Method for an operation of a hob apparatus (10), in particular according to one of claims 1 to 7, with at least one sensor (12), by way of which at least one temperature characteristic variable of an item of cookware and/or of a food to be cooked is detected, **characterised in that** at least one period of time at least substantially remaining is output, after which a temperature-regulated cooking procedure is available, wherein the at least one period of time at least substantially remaining is a period of time at least substantially remaining before a cooking program is available, wherein the cooking program is a procedure which proceeds automatically, in which at least one cooking parameter is automatically set to a value and/or regulated to a value of a value of a reference variable of the at least one cooking parameter which is to be reached at a particular time, wherein a temporal sequence of the at least one cooking parameter is specified.

## Revendications

1. Dispositif pour plaque de cuisson (10) comprenant au moins un capteur (12), qui est configuré pour détecter au moins une grandeur caractéristique de température d'un ustensile de cuisson et/ou d'un aliment à cuire, et comprenant une unité de commande (14), qui est configurée pour traiter l'au moins une grandeur caractéristique de température,
**caractérisé en ce que** l'unité de commande (14) est configurée pour délivrer au moins une durée au moins essentiellement restante, à partir de laquelle un processus de cuisson régulé en température est disponible,
dans lequel l'au moins une durée au moins essentiellement restante est une durée au moins essentiellement restante jusqu'à une disponibilité d'un programme de cuisson, dans lequel le programme de cuisson est un processus qui se déroule automatiquement exécuté par l'unité de commande (14), au cours duquel l'unité de commande (14) règle automatiquement un paramètre de cuisson à une certaine valeur et/ou le régule à une valeur d'une valeur à atteindre d'une grandeur de référence à un moment déterminé de l'au moins un paramètre de cuisson, dans lequel une séquence temporelle de l'au moins un paramètre de cuisson est prédéterminée.

2. Dispositif pour table de cuisson (10) selon la revendication 1, **caractérisé en ce que** l'au moins une durée au moins essentiellement restante est une durée au moins essentiellement restante pour atteindre une température spécifiée.

3. Dispositif pour table de cuisson (10) selon la revendication 2, **caractérisé en ce que** la température spécifiée est une température d'ébullition.

4. Dispositif pour table de cuisson (10) selon l'une des revendications précédentes, **caractérisé en ce que** l'au moins une durée au moins essentiellement restante est d'au moins 80 s.

5. Dispositif pour table de cuisson (10) selon l'une des revendications précédentes, **caractérisé en ce que** l'au moins une durée au moins essentiellement restante est un maximum d'une durée au moins essentiellement restante pour atteindre une température spécifiée et d'une durée au moins essentiellement restante jusqu'à une disponibilité d'un programme de cuisson.

6. Dispositif pour table de cuisson (10) selon l'une des revendications précédentes, **caractérisé en ce que** l'unité de commande (14) est configurée pour délivrer l'au moins une durée au moins essentiellement restante sous forme de grandeur en pourcentage.

7. Dispositif pour table de cuisson (10) selon l'une des revendications précédentes, **caractérisé en ce que** l'unité de commande (14) est configurée pour délivrer l'au moins une durée au moins essentiellement restante sous forme de grandeur absolue.

8. Table de cuisson (16) comprenant au moins un dispositif pour table de cuisson (10) selon l'une des revendications précédentes.

9. Procédé de fonctionnement d'un dispositif pour plaque de cuisson (10), en particulier selon l'une des revendications 1 à 7, comprenant au moins un capteur (12), au moyen duquel au moins une grandeur caractéristique de température d'un ustensile de cuisson et/ou d'un aliment à cuire est détectée,
**caractérisé en ce qu'**au moins une durée au moins essentiellement restante est délivrée, à partir de laquelle un processus de cuisson régulé en température est disponible,
dans lequel l'au moins une durée au moins essentiellement restante est une durée au moins essentiellement restante jusqu'à une disponibilité d'un programme de cuisson, dans lequel le programme de cuisson est un processus qui se déroule automatiquement, au cours duquel au moins un paramètre de cuisson est réglé automatiquement à une certaine valeur et/ou est régulé à une valeur d'une valeur à atteindre à un moment déterminé d'une grandeur de référence de l'au moins un paramètre de cuisson,
dans lequel une séquence temporelle de l'au moins un paramètre de cuisson est prédéterminée.
